# FASCICULE DE BREVET EUROPEEN

(11) **EP 1 675 253 B1**
(45) Date de publication et mention de la délivrance du brevet: **20.02.2013**
(21) Numéro de dépôt: 05027325.9
(22) Date de dépôt: 14.12.2005
(51) Int. Cl.: H02P 1/42, E05F 15/10, E06B 9/68, H02P 1/44

(54) **Procédé de fonctionnement d'une installation domotique comprenant un actionneur et une unité de commande**
Verfahren zum Betrieb eines Heimnetzwerkes mit einer Betätigungseinrichtung und einer Steuereinheit
Method for the operation of a home automation network comprising an actuator and a control unit

(30) Priorité: 21.12.2004 FR 0413655
(43) Date de publication de la demande: 28.06.2006
(73) Titulaire: Somfy SAS, 74300 Cluses (FR)
(72) Inventeur: Dumont d'Ayot, Geoffrey, 74600 Seynod (FR)
(74) Mandataire: Bugnion Genève

(56) Documents cités:
- EP-A- 0 822 315
- EP-A- 1 154 121
- FR-A- 2 806 850
- PATENT ABSTRACTS OF JAPAN vol. 2002, no. 11, 6 novembre 2002 (2002-11-06) & JP 2002 199786 A (YKK CORP), 12 juillet 2002 (2002-07-12)
- PATENT ABSTRACTS OF JAPAN vol. 1999, no. 08, 30 juin 1999 (1999-06-30) & JP 11 081823 A (SHARP CORP), 26 mars 1999 (1999-03-26)

## Description

L'invention concerne un procédé de fonctionnement d'une installation comprenant au moins un actionneur alimenté par une tension électrique alternative et destiné à entraîner un élément mobile équipant un bâtiment, dans un premier sens lorsque la tension électrique alternative est appliquée entre un conducteur de neutre et un premier conducteur de phase et dans un deuxième sens lorsque la tension électrique alternative est appliquée entre le conducteur de neutre et un deuxième conducteur de phase. Elle concerne également un actionneur, une unité de commande et une installation pour la mise en oeuvre du procédé.

Les actionneurs du bâtiment destinés à la manoeuvre d'éléments mobiles comprennent souvent un moteur à induction (ou moteur asynchrone) monophasé à condensateur permanent. Ils sont alimentés par le réseau alternatif, par exemple 230 V 50 Hz à travers un boîtier de commande comprenant une interface utilisateur. Le câblage entre le boîtier de commande et l'actionneur comprend trois fils : un conducteur de neutre et deux conducteurs de phase. Selon le conducteur de phase effectivement relié à la phase du réseau alternatif, le moteur tourne dans un premier sens ou dans un deuxième sens.

On connaît de la demande FR 2 844 625 une installation comprenant un émetteur d'ordres, un récepteur d'ordres et un actionneur, l'actionneur étant alimenté par le réseau alternatif à travers l'émetteur d'ordres et le récepteur d'ordres. Le câblage entre l'émetteur d'ordres et l'actionneur ne comprend que deux conducteurs : un conducteur de phase et un conducteur de neutre. Les ordres de commande transmis entre l'émetteur d'ordres et le récepteur d'ordres consistent en des coupures de certaines alternances de la tension du réseau.

On connaît également de la demande EP 0 822 315, un dispositif de commande filaire de l'alimentation d'un moteur électrique asynchrone dans lequel, une mise en court-circuit des lignes de phase permettant la rotation du moteur dans un premier sens et dans un deuxième sens par un appui simultané sur des touches de commande de rotation du moteur dans le premier sens et dans le deuxième sens place une unité de commande dans un mode de configuration. Une fois dans ce mode de configuration, la rotation du moteur est commandée par des appuis sur les touches servant à commander la rotation du moteur dans le mode de commande. De même dans la demande EP 1 154 121, une unité de commande bascule en mode de programmation lorsqu'un shunt est mis en place pour connecter deux lignes de phase au conducteur de phase.

Dans de telles installations, l'utilisateur ne peut être informé de la bonne exécution d'un ordre, autrement que par l'émission d'un signal sensoriel par exemple un signal visuel ou sonore perceptible au voisinage de l'actionneur, ces installations ne présentant pas de moyens de retour d'information de l'actionneur à l'unité de commande.

On connaît de la demande EP 0 718 729 une installation comprenant des dispositifs domotiques commandés par l'intermédiaire d'un boîtier de commande auquel ils sont reliés par une liaison filaire. Les signaux visuels et/ou sonores peuvent notamment consister en un léger mouvement d'aller-retour d'un volet roulant entraîné par un actionneur. Le problème se pose en particulier lors de l'exécution d'un ordre de commande générale. Cet ordre est donné à partir d'un point de commande particulier, d'où tous les dispositifs ne sont pas visibles. La réaction d'un des dispositifs informe sur l'état des autres dispositifs. Cependant, il est particulièrement intéressant de pouvoir informer l'utilisateur de la bonne exécution des ordres, même lorsque aucun dispositif n'est visible.

On connaît de la demande FR 2 811 703 un dispositif de commande de volet roulant motorisé comportant un boîtier de commande muni d'un inverseur de commande de montée et de descente du tablier du volet roulant. Ce boîtier est raccordé au réseau alternatif et est relié de manière filaire au moteur d'entraînement du volet roulant. Le boîtier comprend des moyens de mesure de la charge du moteur, ces moyens étant utilisés pour détecter les fins de course et commander les arrêts du volet roulant au niveau de ces fins de course. Le boîtier est donc partiellement informé de l'état de l'actionneur. Cependant, un tel dispositif ne permettrait pas de commander plusieurs actionneurs.

Le but de l'invention est de fournir un actionneur visant à pallier aux problèmes cités et à apporter des améliorations par rapport aux dispositifs connus de l'art antérieur. L'invention permet d'informer l'utilisateur de différents états dans lequel se trouve l'actionneur sans avoir recours à des moyens de communication à distance de type ondes radioélectriques ou ondes infrarouges.

Ce problème est résolu par un actionneur selon la revendication 1.

Différents modes de réalisation de l'actionneur sont définis par les revendications dépendantes 2 à 7.

L'installation comprend les caractéristiques des revendications 8-10.

Le dessin annexé représente, à titre d'exemple, un mode d'exécution du procédé de fonctionnement selon l'invention et un mode de réalisation d'une installation selon l'invention.

La figure 1 est un schéma d'un mode de réalisation d'une installation selon l'invention.

La figure 2 est un ordinogramme d'un mode de réalisation du procédé de fonctionnement de l'installation selon l'invention.

Les figures 3 à 6 sont des ordinogrammes de procédures de fonctionnement de l'installation.

La figure 7 est un schéma d'une variante de réalisation des premier et deuxième interrupteurs commandés de l'actionneur.

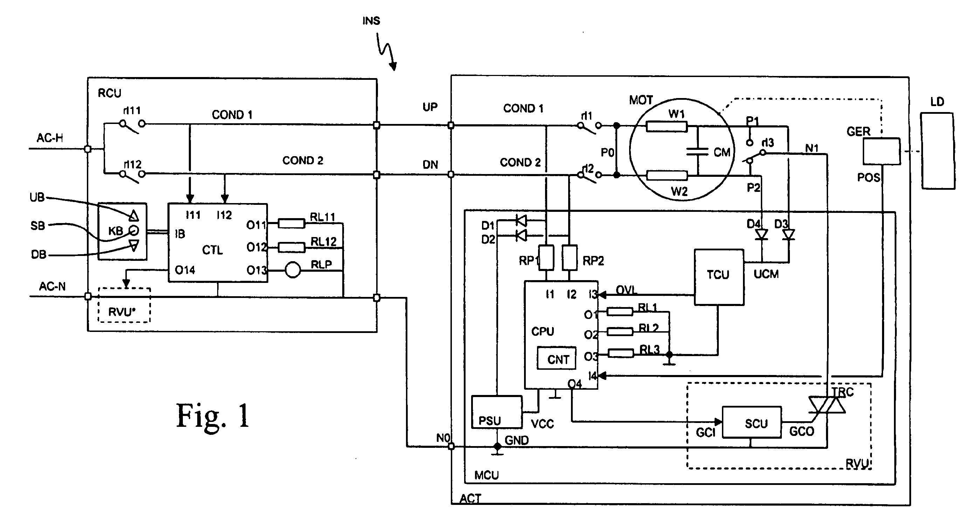

L'installation INS représentée à la figure 1 comprend principalement un actionneur ACT et une unité de commande RCU. L'actionneur ACT permet l'entraînement d'un élément mobile LD tel qu'un volet roulant. L'installation est alimentée par le réseau alternatif, par le biais d'un conducteur de neutre AC-N et d'un conducteur de phase AC-H. L'unité de commande RCU permet d'appliquer le potentiel du conducteur de phase AC-H soit sur une entrée de phase montée UP soit sur une entrée de phase descente DN de l'actionneur. Le conducteur de neutre AC-N est raccordé à une borne de neutre N0 de l'actionneur ACT.

L'élément mobile LD est entraîné par un moteur MOT de type à induction par l'intermédiaire d'un réducteur GER. Il est à noter que la liaison entre cet arbre de sortie et l'élément mobile LD n'est pas nécessairement rigide. Le moteur MOT comprend un premier enroulement W1, un deuxième enroulement W2 et un condensateur permanent CM. Le point commun aux deux enroulements P0 est relié à un premier contact de relais rl1 et à un deuxième contact de relais rl2. Lorsque le premier contact de relais est activé, le point commun P0 aux deux enroulements est relié à l'entrée de phase montée UP et, lorsque le deuxième contact de relais est activé, le point commun P0 aux deux enroulements est relié à l'entrée de phase descente DN.

Les deux autres extrémités P1 et P2 de chaque enroulement sont reliées aux bornes d'un condensateur permanent CM, permettant un déphasage approprié des courants parcourant chaque enroulement. Un contact relais inverseur rl3 permet une connexion d'un fil interne N1 soit à l'extrémité P1 du premier enroulement, soit à l'extrémité P2 du deuxième enroulement. Le fil interne N1 est relié à la borne de neutre N0, à travers un triac TRC. Dans d'autres modes de réalisation simplifiée, la liaison entre les points N1 et N0 peut être directe. Le triac TRC peut aussi être remplacé par tout type d'interrupteur commandé.

Un circuit électronique de commande MCU comprend divers moyens assurant la commande de l'actionneur, c'est-à-dire des moyens de réception et d'interprétation des ordres reçus, des moyens de commande d'alimentation de l'actionneur, et de coupure de cette alimentation soit par ordre soit lorsqu'une fin de course est détectée.

A cet effet, le circuit électronique de commande MCU comprend un dispositif d'alimentation PSU très basse tension, par exemple 5 V. Le dispositif d'alimentation comprend par exemple un transformateur dont le secondaire permet de délivrer la tension d'alimentation VCC, après passage dans un redresseur et un élément de filtrage non représentés. Tout type simple de convertisseur alternatif-continu abaisseur convient pour réaliser le dispositif d'alimentation PSU.

Le circuit électronique de commande MCU comprend une unité logique de traitement CPU tel qu'un microcontrôleur. Cette unité logique de traitement est alimentée par la tension d'alimentation VCC et comprend une première entrée I1 reliée à l'entrée de phase montée UP par un premier montage abaisseur de tension RP1 et une deuxième entrée 12 reliée à l'entrée de phase descente DN par un deuxième montage abaisseur de tension RP2. Ces montages abaisseurs de tension sont symbolisés par une résistance mais peuvent comprendre un pont diviseur et divers éléments de protection et/ou de redressement.

Quand l'unité de commande RCU établit le contact entre le conducteur de phase AC-H et la borne d'entrée de phase montée UP, la première entrée I1 passe à l'état logique haut, ce qui permet de détecter un ordre de montée. Inversement, la deuxième entrée I2 passe à l'état logique haut quand l'unité de commande RCU établit le contact entre le conducteur de phase AC-H et la borne d'entrée de la phase descente DN, ce qui permet de détecter un ordre de descente.

L'unité logique de traitement CPU comprend une première sortie 01 alimentant une première bobine de relais RL1 et une deuxième sortie 02 alimentant une deuxième bobine de relais RL2, ces bobines agissant respectivement sur le premier contact de relais rl1 et sur le deuxième contact de relais rl2.

L'unité logique de traitement comprend une troisième sortie 03 alimentant une troisième bobine de relais RL3. Cette bobine de relais agit sur la position du contact relais inverseur rl3. Selon que la bobine de relais RL3 est ou non alimentée, le moteur MOT tourne dans l'un ou l'autre sens. Cette disposition des contacts relais permet à l'unité logique de traitement CPU de provoquer l'arrêt du moteur même en présence d'un ordre de mouvement donné par l'unité de commande RCU. Elle permet également d'inverser si besoin la relation entre chaque position de l'interrupteur inverseur et chaque phase moteur. D'autres dispositions connues de l'art antérieur permettent de réaliser cette fonction.

L'unité logique de traitement comprend également une troisième entrée I3 connectée à la sortie OVL d'un dispositif TCU de détection de surcharge d'efforts. Cette entrée 13 peut être de type logique et le dispositif TCU de détection de surcharge d'efforts peut faire passer à l'état logique haut sa sortie de surcharge OVL au moins si la variation de couple mesurée dépasse une valeur prédéterminée dans un intervalle de temps donné.

Plus précisément, le dispositif TCU de détection de surcharge d'efforts mesure un signal de tension UCM aux bornes du condensateur permanent CM qui correspond à la valeur du couple moteur. Quand le rotor du moteur ralentit, du fait d'un couple résistant plus important, cette tension diminue. C'est donc au moins la décroissance de cette tension dans un intervalle de temps donné qui provoque le passage à l'état haut de la sortie de surcharge OVL. Outre cette fonction, le dispositif TCU de détection de surcharge d'efforts peut de plus faire passer la sortie de surcharge OVL à l'état haut si l'amplitude de la tension aux bornes du condensateur passe au-dessous d'un seuil donné. Un mode de réalisation d'un tel dispositif de détection de surcharge d'efforts est décrit dans le brevet FR 2 806 850, en référence à la figure 1, de la ligne 31 de la page 4 à la ligne 14 de la page 6.

Le signal de tension UCM est égal (à 0.6 V près) à la tension aux bornes du condensateur permanent CM, redressée simple alternance puisqu'une des deux diodes D3 ou D4 devient bloquée selon la position du contact relais inverseur rl3.

Alternativement, le dispositif TCU de détection de surcharge d'efforts peut délivrer une tension analogique sur la sortie de surcharge OVL et la troisième entrée 13 de l'unité logique de traitement CPU peut être de type analogique. Le traitement de l'étude des variations de cette grandeur analogique est alors réalisé dans l'unité logique de traitement CPU.

L'unité logique de traitement comprend une quatrième entrée 14, raccordée à la sortie d'un capteur de position POS. Ce capteur de position permet la mesure de la position de l'élément mobile LD. Préférentiellement, le capteur de position est disposé au niveau de la sortie du réducteur GER. Ce capteur comprend communément deux sondes à effet Hall permettant de déterminer la direction et l'amplitude du mouvement. Les impulsions reçues sur la quatrième entrée 14 à partir de la sortie du capteur de position POS permettent de mettre à jour une mémoire, typiquement un compteur CNT, dont le contenu est l'image de la position de l'élément mobile LD.

L'unité logique de traitement comprend enfin une quatrième sortie 04 raccordée à l'entrée de pilotage GCI d'un circuit de pilotage de triac SCU, dont la sortie de pilotage GCO est raccordée à la gâchette du triac TRC.

Le triac peut être utilisé pour réduire la puissance du moteur quand l'élément mobile LD arrive au voisinage de butées. Il peut aussi servir avantageusement à couper l'alimentation du moteur lors de la réception d'un ordre d'arrêt. Dans ce cas, les trois contacts des relais, rl1-rl3, ne nécessitent pas de présenter un pouvoir de coupure important, ce qui permet l'utilisation de relais économiques. L'intérêt de la présence du triac est aussi de permettre d'agir sur le premier et le deuxième contact de relais rl1, rl2 sans pour autant provoquer la rotation du moteur. Cependant, le triac peut aussi être remplacé par un court-circuit entre les points N1 et N0 dans le cas d'un montage simplifié.

Sur la figure 1, l'unité de commande à distance RCU est reliée au conducteur de neutre AC-N, mais cela n'est pas indispensable. Cette unité comprend un clavier KB, relié à une entrée bus IB d'une unité logique de traitement CTL, telle qu'un microcontrôleur. Le clavier représenté comprend une touche UB de commande de mouvement de montée, une touche DB de commande de mouvement de descente et une touche SB de commande d'arrêt de mouvement.

Le circuit d'alimentation de l'unité logique de traitement CTL n'est pas représenté. Des montages connus de l'état de la technique permettent l'alimentation de circuits électroniques dans un boîtier de commande, même en l'absence de conducteur de neutre.

L'unité logique de traitement CTL comprend une première sortie O11 reliée à une première bobine de relais RL11 et une deuxième sortie O12 reliée à une deuxième bobine de relais RL12. Ces bobines agissent respectivement sur un premier contact rl11 et sur un deuxième contact rl12. Ces contacts ont un point commun relié au conducteur de phase AC-H, l'autre point étant relié respectivement à l'entrée de phase montée UP ou à l'entrée de phase descente DN de l'actionneur ACT. Les interrupteurs rl1 et rl11 sont reliés par un conducteur référencé COND1 et les interrupteurs rl2 et rl12 par un conducteur référencé COND2.

L'état alimenté ou non alimenté de ces entrées peut être déterminé par l'unité logique de traitement CTL à l'aide d'une première entrée I11 et d'une deuxième entrée I12. Les flèches orientées vers les entrées I11 et I12 symbolisent les divers éléments de chute de tension et de protection (résistances, diodes, écrêteurs) permettant la transformation du signal électrique de manière à le rendre compatible avec l'entrée d'un microcontrôleur. Quand la tension secteur est appliquée au conducteur relié à l'entrée de phase montée UP, alors la première entrée I11 de l'unité logique de traitement CTL passe dans l'état logique haut. De même, quand la tension secteur est appliquée au conducteur relié à l'entrée de phase descente DN, alors la deuxième entrée l12 de l'unité logique de traitement CTL passe dans l'état logique haut.

Une troisième sortie O13 de l'unité logique de traitement CTL permet d'alimenter un voyant lumineux de signalisation RLP.

Bien que l'installation décrite comprenne une unité de commande et un actionneur, il est clair que l'installation selon l'invention peut également comprendre plusieurs unités de commande et/ou plusieurs actionneurs, une même unité de commande pouvant commander différents actionneurs et/ou différentes unités de commande pouvant commander un même actionneur. Dans ce cas, toutes les unités de commandes et tous les actionneurs sont reliés à un bus à trois fils comprenant un conducteur de neutre et les deux conducteurs COND1 et COND2 et au moins une des unités de commande est reliée à la phase AC-H et au neutre de la tension d'alimentation.

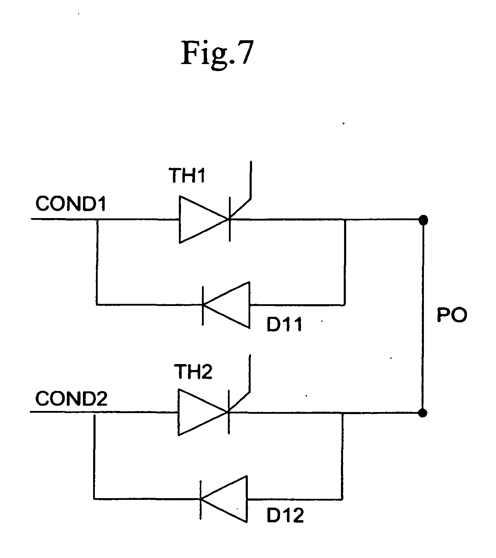

Dans un mode de réalisation de l'actionneur, les interrupteurs rl1 et rl2 sont remplacés par les montages à thyristor et diode représentés à la figure 7. Ces montages comprennent chacun un thyristor TH1 et TH2 et une diode D11 et D12 anti-parallèle. Les cathodes des thyristors sont raccordées au point P0. La gâchette du thyristor TH1 est reliée à la sortie O1 de l'unité logique de traitement CPU et la gâchette TH2 du thyristor TH2 est reliée à la sortie 02 de l'unité logique de traitement CPU. Dans un tel mode de réalisation de l'actionneur, un triac TRC ou un relais doit être disposé entre les points N1 et N0, sauf si l'alimentation en simple alternance est insuffisante pour entraîner le moteur.

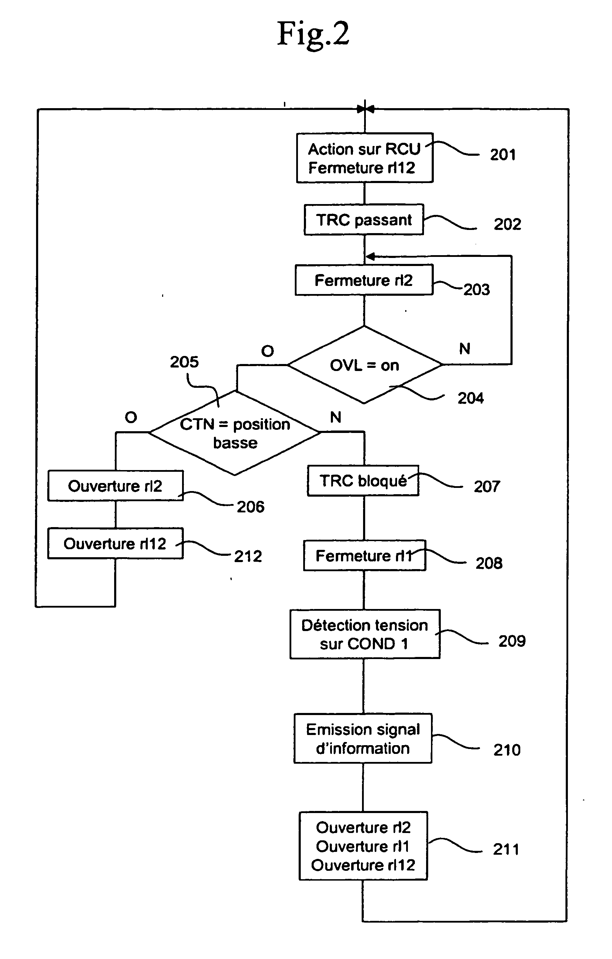

Une première procédure relative au fonctionnement de l'installation est décrite en référence à la figure 2.

Un premier exemple de procédure permet de confirmer la bonne exécution d'un ordre tel qu'un ordre d'entraîner l'élément mobile vers la position basse. Dans une première étape 201, une action de l'utilisateur sur l'unité de commande entraîne la fermeture de l'interrupteur commandé rl12. Ceci a pour conséquence de relier le conducteur COND2 à la phase de la tension d'alimentation.

Dans une deuxième étape 202, la présence d'une tension sur le conducteur COND2 est détectée par l'actionneur ACT au niveau de son unité logique de traitement CPU : ceci est interprété par l'unité logique de traitement CPU comme un ordre d'alimentation du moteur MOT.

Dans une troisième étape 203, l'interrupteur commandé rl2 est fermé et le moteur MOT est alimenté de manière à tourner dans un premier sens.

Dans des étapes 204 et 205, les valeurs de différents paramètres sont scrutées : par exemple l'état de la sortie OVL du dispositif de détection de surcharge d'effort et l'état du compteur CNT.

La combinaison des états de ces paramètres permet de déterminer l'état de l'actionneur. Si l'état de la sortie OVL indique qu'aucune surcharge a été détectée, la procédure boucle sur l'étape 203. Si l'état de la sortie OVL indique qu'une surcharge a été détectée, on passe à l'étape 205 de test de la valeur du compteur CNT. Si une surcharge est détectée alors que l'état du compteur ne correspond pas à la position de fin de course basse, l'élément mobile a rencontré un obstacle.

Dans ce cas, dans une étape 207, le triac TRC est bloqué pour couper l'alimentation du moteur. Ce blocage peut éventuellement intervenir après une brève commutation de l'interrupteur commandé rl3 visant à entraîner l'élément mobile dans le sens de la montée pendant un bref moment.

Dans une étape 208, l'interrupteur rl1 est fermé. Le conducteur COND1 est ainsi porté au même potentiel que le conducteur COND2.

L'apparition de ce potentiel sur le conducteur COND1 est détectée à une étape 209 par l'unité logique de traitement de l'unité de commande RCU. Cette apparition du potentiel signifie qu'un contact direct a été établi entre les conducteurs COND1 et COND2.

Dans une étape 210, en conséquence de la détection de l'étape 209, l'unité de commande RCU signale à l'utilisateur que la course de l'élément mobile a été interrompue par un obstacle et que l'ordre d'amener l'élément mobile en position basse n'a pas été complètement exécuté. Ce signal d'information peut par exemple consister en l'activation d'un voyant sur l'unité de commande RCU.

Dans une étape 211, les interrupteurs rl2, rl1 et rl12, qui avaient précédemment été fermés, sont ouverts. La procédure boucle ensuite sur l'étape 201.

Si lors de l'étape 205, une surcharge est détectée et que l'état du compteur correspond à la position de fin de course basse, l'élément mobile est arrivé en fin de course basse et, par conséquent l'ordre a correctement été exécuté.

Dans une étape 206, l'interrupteur rl2, qui avait précédemment été fermé, est ouvert.

Dans une étape 212, à l'échéance d'une temporisation déclenchée dans l'unité de commande par l'action de l'étape 201 sur celle-ci, l'interrupteur rl12 est ouvert.

La procédure boucle ensuite sur l'étape 201. Aucun signal n'est émis par l'unité de commande.

Alternativement, un signal pourrait être émis par l'unité de commande à la fois dans le cas où l'élément mobile a rencontré un obstacle et dans le cas où l'élément mobile est arrivé en fin de course basse.

Pour ce faire, l'interrupteur peut par exemple être fermé et ouvert deux fois dans un intervalle de temps donné à l'étape 208. Cette séquence de fermeture et d'ouverture détectée par l'unité de commande RCU signifierait que l'élément mobile a été interrompu dans sa course et que l'ordre n'est pas exécuté. L'interrupteur peut également être fermé et ouvert une seule fois pendant un même intervalle de temps donné dans une étape antérieure à l'étape 206. Cette séquence de fermeture et d'ouverture détectée par l'unité de commande RCU signifierait que l'élément mobile est arrivé en fin de course et que l'ordre est exécuté. L'une de ces informations pourrait être signalée par l'activation d'un premier voyant et l'autre par l'activation d'un deuxième voyant sur l'unité de commande.

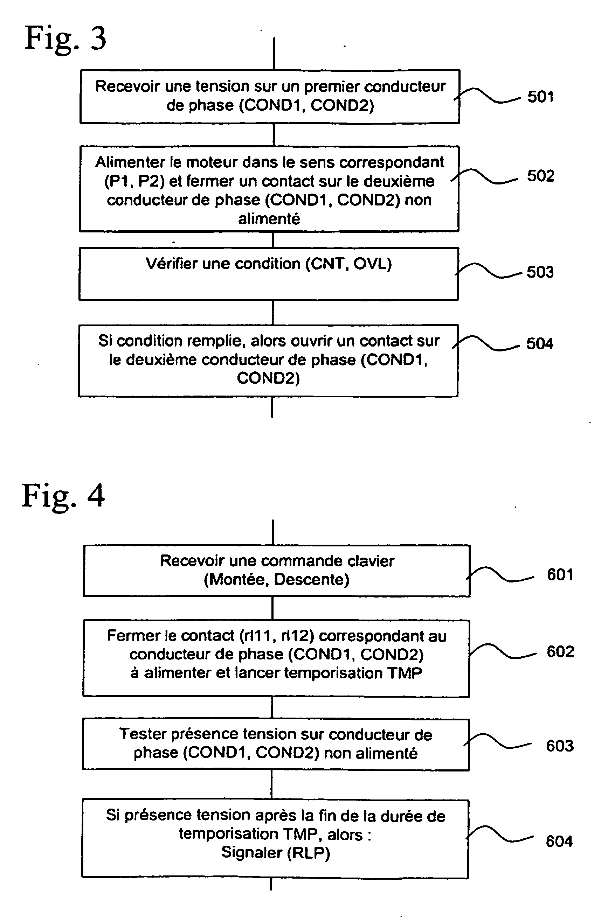

Cette première procédure est susceptible de nombreuses variantes. Il peut, par exemple, se révéler plus intéressant que l'actionneur ferme les deux contacts rl1 et rl2 dès réception de l'ordre de manoeuvre. Ces contacts restent fermés pendant l'exécution de l'ordre et tant que celui-ci n'a pas été exécuté complètement. Une fois l'ordre exécuté complètement l'un des interrupteurs est ouvert pour signaler l'arrivée de l'élément mobile en fin de course. Cette variante d'exécution est décrite en référence aux figures 3 et 4 relatives à des procédures de fonctionnement de l'actionneur et de l'unité de commande.

Cette variante d'exécution est particulièrement intéressante si plusieurs actionneurs sont reliés à une même unité de commande. Dans ce cas, l'ordre de descente précédent est appliqué à plusieurs actionneurs. Pour ce faire, dans une étape 601, à réception d'une activation de la touche DB du clavier KB de l'unité de commande RCU, le contact d'alimentation rl12 est fermé, dans une étape 602 de manière à raccorder le fil de phase AC-H à l'entrée DN des actionneurs. En outre, dans cette étape 602, une temporisation TMP dont la durée correspond au temps de manoeuvre maximum des actionneurs, par exemple 15 secondes, est lancée. Dès réception de l'ordre de descente dans une étape 501, chaque actionneur alimente, dans une étape 502, le moteur dans le sens correspondant à la descente, mais également ferme le contact rl1 sur le conducteur COND1, non alimenté depuis l'unité de commande. Chaque actionneur teste, dans une étape 503, la bonne exécution de l'ordre. Par exemple, il teste la valeur contenue dans le compteur CNT et vérifie si cette valeur est égale à la valeur du compteur correspondant à la position basse de l'élément mobile. L'actionneur ouvre ensuite, dans une étape 504 le contact rl1 relié au conducteur COND 1 dès que la condition est vérifiée. Le potentiel du conducteur COND1 est testé, dans une étape 603, pendant la temporisation. Ce potentiel doit normalement être à l'état haut pendant le mouvement des actionneurs, mais doit retomber à l'état bas dès que tous les éléments mobiles ont atteint leur position de fin de course basse. Autrement dit, le conducteur COND1 commun aux actionneurs n'est plus alimenté dès que tous les éléments mobiles sont normalement arrivés en position basse. Si, dans une étape 604, le potentiel du conducteur COND1 n'est pas retombé à l'échéance de la temporisation, cela signifie qu'au moins l'un des éléments mobiles n'a pas atteint sa position de fin de course basse. L'unité de commande émet alors un signal d'information en conséquence.

Une deuxième procédure relative à un ordre de déplacement de l'élément mobile vers une position intermédiaire prédéfinie est décrite ci-après.

On suppose qu'une valeur particulière de position intermédiaire ip a été préalablement enregistrée dans une mémoire de l'actionneur.

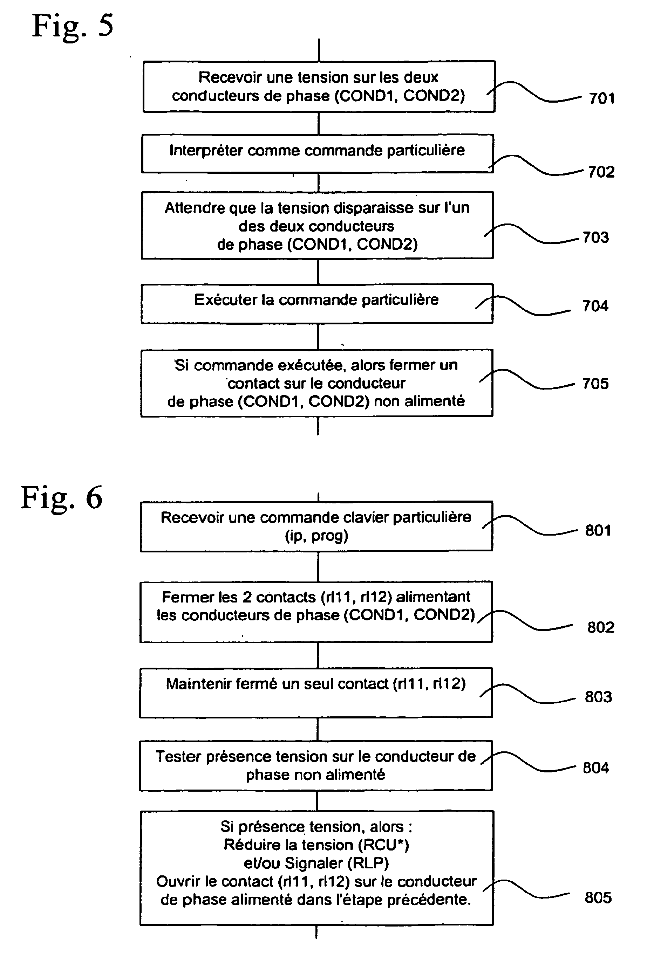

Cette deuxième procédure est décrite en référence aux figures 5 et 6 relatives à des procédures de fonctionnement de l'actionneur et de l'unité de commande. Pour commander ce déplacement, l'utilisateur appuie, dans une étape 801, sur la touche d'arrêt SB du clavier KB de l'unité de commande RCU, alors qu'aucun ordre de mouvement n'est en cours d'exécution. Cet appui est interprété par l'unité logique de traitement CTL comme un ordre d'aller en position intermédiaire. Cet ordre est alors communiqué à l'actionneur dans une étape 802, où les deux interrupteurs rl11 et rl12 sont fermés et les deux conducteurs COND1 et COND2 sont portés au potentiel de la ligne de phase pendant une durée prédéfinie. Dans une étape 701, cet état des conducteurs est détecté par l'unité logique de traitement CPU de l'actionneur qui interprète, dans une étape 702, ceci comme un ordre de déplacement de l'élément mobile vers la position intermédiaire. Une fois la durée prédéfinie échue, dans une étape 803, l'un des deux interrupteurs rl11 et rl12 est ouvert (par exemple rl12) et l'un des interrupteurs rl1 ou rl2 est fermé (par exemple rl1). Dès que la fermeture de l'un des interrupteurs rl1 ou rl2 et que l'ouverture de l'un des deux interrupteurs rl11 et rl12 est détectée à une étape 703, le moteur est alimenté dans une étape 704. L'état de l'interrupteur inverseur rl3 aura préalablement été commandé en fonction la valeur courante du compteur CNT (image de la position courante de l'élément mobile) et de la valeur ip stockée en mémoire (image de la position intermédiaire prédéfinie) afin que l'activation du moteur provoque le déplacement de l'élément mobile dans le bon sens.

Dans une étape 804, le potentiel des conducteurs de phase COND1 et COND2 est testé. Dès que la valeur contenue dans le compteur CNT atteint la valeur ip stockée en mémoire, le triac TRC passe à l'état bloqué et le moteur n'est plus alimenté. Dans une étape 705, l'interrupteur rl2 est fermé. Les interrupteurs rl1 et rl11 étant aussi fermés, le potentiel des conducteurs COND1 et COND2 est porté au potentiel de la phase de la tension d'alimentation. L'apparition de ce potentiel sur le conducteur COND2 est détectée, dans une étape 805, par l'unité logique de traitement de l'unité de commande RCU. Cette apparition signifie qu'un contact direct a été établi entre les conducteurs COND1 et COND2. En conséquence, l'unité de commande RCU signale à l'utilisateur que l'élément mobile a atteint sa position intermédiaire prédéfinie et que l'ordre d'amener l'élément mobile en position intermédiaire a été correctement exécuté. Ce signal d'information peut par exemple consister en l'activation d'un voyant sur l'unité de commande RCU. L'unité de commande peut en outre commander l'exécution d'autres procédures telles que notamment une phase d'alimentation à tension réduite.

Dans des variantes d'exécution, l'actionneur peut commander une séquence particulière de fermeture et d'ouverture des interrupteurs commandés rl1 et rl2 pour indiquer que l'élément mobile a atteint la position intermédiaire prédéfinie. En conséquence de cette indication, l'unité de commande RCU peut commander ou non l'ouverture des interrupteurs rl11 et rl12 en fonction de l'action qu'avait exercé l'utilisateur. Si l'action de l'utilisateur correspondait à un ordre de déplacement de l'élément mobile jusqu'à la position intermédiaire prédéfinie, les interrupteurs sont ouverts et, si l'action correspondait à un ordre de déplacement de l'élément mobile jusqu'à atteindre une position de fin de course, les états des interrupteurs sont conservés. L'intérêt d'une telle variante est qu'il n'y a pas à transmettre un ordre particulier d'aller en position intermédiaire, ce qui supprime les étapes 802, 701, 702, et 703. Il faut noter que, selon ce procédé, l'unité de commande RCU connaît la situation relative du produit mobile LD par rapport à la position intermédiaire prédéfinie, et se trouve donc en situation de déterminer s'il faut fermer l'interrupteur commandé rl11 ou l'interrupteur commandé rl12 pour provoquer le mouvement allant vers cette position intermédiaire.

Dans une variante d'exécution, une commande d'arrêt par appui sur la touche SB du clavier KB de l'unité de commande RCU, alors qu'un ordre de mouvement est en cours d'exécution, provoque dans l'unité de commande la fermeture de l'inverseur commandé non encore activé (par exemple rl11 si un ordre de descente est en cours d'exécution et que rl12 est fermé). Quand il est détecté par l'unité logique de traitement CPU de l'actionneur que les deux entrées logiques I1 et I2 sont à l'état haut, alors un ordre d'ouverture du triac TRC est donné sur la sortie 04 de l'unité logique de traitement, ce qui provoque l'arrêt du moteur bien que l'actionneur reste alimenté. Il est alors possible de confirmer la bonne exécution de l'arrêt par une ouverture, ou une combinaison d'ouvertures et fermetures d'un des contacts rl1 ou rl2.

Il est à noter que ce fonctionnement est aussi possible dans le cas de deux unités de commande branchées en parallèle, l'une ayant donné l'ordre de mouvement alors que l'action sur la touche d'arrêt est provoquée sur l'autre unité.

Il est aussi possible, quand il est détecté par l'unité logique de traitement CPU de l'actionneur que les deux entrées logiques I1 et I2 sont à l'état haut, de simplement ouvrir le contact commandé (rl1 ou rl2) qui provoquait l'alimentation du moteur. Dans ce cas, il n'y a pas de retour d'information sur la bonne exécution de l'ordre d'arrêt. Cette dernière variante sera utilisée en cas de remplacement du contact commandé, tel le triac TRC, entre le fil interne N1 et le conducteur de neutre AC-N, par une liaison directe.

Selon une autre variante de procédure de fonctionnement, l'actionneur peut être alimenté à tension réduite à partir de l'unité de commande RCU, suite à une information transmise de l'actionneur à l'unité de commande par une séquence de commutation de l'interrupteur rl1 ou rl2. Pour ce faire, l'unité de commande RCU doit être munie d'un dispositif à triac de réduction de la tension RVU* identique au dispositif RVU représenté à la figure 1. L'implantation du dispositif de réduction de tension RVU* est représentée en trait pointillé dans l'unité de commande à la figure 1. Un tel dispositif est activé par une quatrième sortie O14 de l'unité logique de traitement CTL. De cette manière, des phases de fonctionnement de l'actionneur à couple réduit peuvent être engagées dès que des conditions sont remplies au niveau de l'actionneur. Une unité de commande RCU présentant un tel dispositif de réduction de la tension est particulièrement intéressante lorsque l'actionneur ne présente pas de dispositif de réduction de tension.

L'unité de commande décrite présente un clavier, cependant, elle peut comprendre en addition ou en remplacement de ce clavier tout type de détecteur connu de l'homme du métier tel que par exemple un détecteur de présence, un détecteur de vent ou un détecteur d'ensoleillement.

Comme vu précédemment, dans certains cas, les interrupteurs commandés rl1, rl2, rl11 et rl12 doivent réaliser plusieurs commutations dans un intervalle de temps réduit. Dans ces cas, les interrupteurs consistent avantageusement en des interrupteurs à semi-conducteurs. Lorsque de nombreuses commutations peuvent être commandées dans un intervalle de temps restreint, les séquences de commutations peuvent coder des identifiants d'unité de commande et d'actionneur et différentes informations ou commandes.

Le montage dans lequel les interrupteurs rl1 et rl2 sont réalisés grâce à des montages à thyristor se révèle particulièrement intéressant dans la mesure où il permet de mettre en oeuvre des procédures de transmission d'informations de l'actionneur vers l'unité de commande dans lesquelles différentes données peuvent être codées de manière simple en agissant sur des paramètres de décalage angulaire de déclenchement de l'état passant des thyristors.

On reprend l'exemple d'un ordre de descente de l'élément mobile vu précédemment. Suite à une action de l'utilisateur sur l'unité de commande, l'interrupteur commandé rl12 est fermé. Le conducteur de phase COND2 est par conséquent porté au potentiel de la phase de la tension d'alimentation. L'interrupteur entre les points N1 et N0 étant ouvert, le moteur n'est pas alimenté. De même, les thyristors TH1 et TH2 étant bloqués, le conducteur COND1 n'est pas porté au potentiel du conducteur COND2. Une fois le potentiel du COND1 détecté et interprété comme un ordre de descente de l'élément mobile, le thyristor TH2 est rendu passant. Ainsi, les alternances positives de la tension d'alimentation sont communiquées au conducteur COND1 à travers le thyristor TH2 et la diode D11. Par exemple, pendant toute la durée de la phase d'alimentation du moteur, le signal de gâchette émis par la sortie 02 de l'unité logique de traitement permet de transmettre la quasi-intégralité des alternances positives à l'exception d'une alternance sur dix, pour laquelle l'état passant du thyristor TH2 est rendu passant avec un décalage angulaire de 30°. Ce faible décalage intervenant de temps en temps peut aisément être détecté par l'unité de commande qui scrute le potentiel du conducteur COND1 et permet une alimentation correcte du moteur.

Dans le cas où un obstacle est détecté alors que l'élément mobile ne se trouve pas en position basse, le décalage angulaire sur le déclenchement du thyristor peut être modifié. Il peut par exemple être fixé à 90° et intervenir toutes les trois alternances positives.

Ce décalage est détecté par l'unité de commande qui scrute le potentiel du conducteur COND1 et interprété comme signifiant que l'élément mobile a rencontré un obstacle. L'unité de commande peut ensuite émettre un signal d'information à l'attention de l'utilisateur.

Lorsque la valeur atteinte par le compteur CNT est identique à la valeur stockée en mémoire et correspondant à la position basse de l'élément mobile, le thyristor TH1 peut également être rendu passant. Dans ce cas toutes les alternances de la tension d'alimentation sont transmises au conducteur COND1. Le potentiel de ce conducteur est détecté par l'unité de commande qui l'interprète comme signifiant que l'élément mobile est arrivé en position basse. L'unité de commande peut ensuite émettre un signal d'information à l'attention de l'utilisateur.

En jouant sur l'existence des signaux de gâchette pour commander l'état passant des thyristors TH1 et/ou TH2, sur les décalages angulaires de ces signaux et sur la fréquence de ces décalages, il est possible de coder un grand nombre d'informations qui peuvent être transmises de l'actionneur à l'unité de commande.

Lorsque les interrupteurs commandés rl1 et rl2 sont réalisés par des montages à thyristor comme décrit précédemment, ces thyristors peuvent être commandés de manière à alimenter le moteur électrique sous tension réduite en supprimant une partie des alternances positives ou négatives de la tension d'alimentation.

Ainsi, une fois un protocole de communication et des liens d'appairage entre les unités de commande et les actionneurs définis, les unités de commandes et les actionneurs peuvent communiquer sélectivement ou non entre eux.

Par exemple, l'installation peut comporter un actionneur relié à plusieurs unités de commande, connectées en parallèle. Quand une unité de commande envoie un ordre de monter à l'actionneur, et que cet ordre est correctement exécuté, l'actionneur adresse le message de confirmation simultanément à toutes les unités de commande. Toutes sont alors renseignées sur la position du produit mobile et peuvent mettre à jour leur affichage ou autre.

Le contact direct établi et/ou supprimé entre les deux conducteurs de phase COND1 et COND2 pour transmettre une information peut donc être provoqué sur des intervalles de temps très courts, et en particulier inférieurs à la demi-période du secteur alternatif.

Enfin l'invention peut s'appliquer à un actionneur comportant tout type de moteur, en particulier un moteur à courant continu, pourvu que le sens de rotation soit défini par l'application de la tension du secteur entre le conducteur de neutre et soit un premier conducteur de phase, soit un second conducteur de phase.

## Revendications

1. Actionneur (ACT) alimenté par une tension électrique alternative, destiné à entraîner un élément mobile (LD) équipant un bâtiment dans un premier sens lorsque la tension électrique alternative est appliquée entre un conducteur de neutre (AC-N) et un premier conducteur de phase (COND1) et dans un deuxième sens lorsque la tension électrique alternative est appliquée entre le conducteur de neutre (AC-N) et un deuxième conducteur de phase (COND2) et comprenant un moteur (MOT) à induction monophasé à condensateur permanent (CM), le condensateur étant relié à chaque extrémité non commune de deux enroulements (W1, W2) du moteur (MOT), ces enroulements comportant par ailleurs une extrémité commune (PO), et au moins un premier (rI1), un deuxième (rI2) interrupteur commandé, un troisième interrupteur commandé (rl3) de type inverseur qu'il comprend caractérisé et en ce que le premier interrupteur commandé (rI1) permet de relier le premier conducteur de phase (COND1) à l'extrémité commune (P0) des enroulements (W1, W2), en ce que le deuxième interrupteur commandé (rl2) permet de relier le deuxième conducteur de phase (COND2) à l'extrémité commune (P0) des enroulements (W1, W2) et en ce que le troisième interrupteur commandé (rI3) permet une connexion d'un fil interne (N1) soit à l'extrémité non commune (P1) du premier enroulement, soit à l'extrémité non commune (P2) du deuxième enroulement, le fil interne (N1) étant relié à une borne de neutre (N0), à travers un quatrième interrupteur commandé (TRC) ou à travers une liaison directe.

2. Actionneur selon la revendication 1, **caractérisé en ce qu'**une information détectée au niveau de l'actionneur (ACT) provoque une séquence d'au moins une commutation établissant ou supprimant un contact direct entre le premier (COND1) et le deuxième (COND2) conducteur de phase.

3. Actionneur selon la revendication 2, **caractérisé en ce que** l'information concerne la survenance d'au moins un des événements suivants :
- entrée de l'actionneur (ACT) dans un mode de programmation,
- atteinte d'une position particulière par l'élément mobile,
- détection d'une surcharge,
- atteinte d'une température critique par l'un des composants de l'actionneur (ACT),
- début d'exécution d'un ordre,
- fin d'exécution d'un ordre.

4. Actionneur (ACT) selon l'une des revendications précédentes, **caractérisé en ce qu'**il comprend un dispositif (TCU) de détection de surcharge d'efforts mesurant au moins la tension aux bornes du condensateur permanent (CM).

5. Actionneur (ACT) selon l'une des revendications précédentes, **caractérisé en ce qu'**il comprend des moyens (CPU) permettant de fermer le premier interrupteur commandé (rI1) et le deuxième interrupteur commandé (rI2) simultanément.

6. Actionneur (ACT) selon l'une des revendications précédentes, **caractérisé en ce qu'**il comprend des moyens (RP1, RP2, CPU) pour détecter l'apparition d'un même potentiel sur le premier conducteur de phase (COND1) et le deuxième conducteur de phase (COND2), pendant que l'un des premier ou deuxième interrupteur commandé (rl1, rl2) est ouvert alors que l'autre est fermé et pour provoquer l'ouverture de l'interrupteur commandé fermé.

7. Actionneur (ACT) selon la revendication 1, **caractérisé en ce qu'**il comprend des moyens (CPU, RVU) pour provoquer l'ouverture du quatrième interrupteur commandé (TRC) lors de l'apparition d'un même potentiel sur le premier conducteur de phase (COND1) et le deuxième conducteur de phase (COND2), pendant que l'un des premier ou deuxième interrupteur commandé (rl1, rl2) est ouvert alors que l'autre est fermé.

8. Installation (INS) comprenant au moins un actionneur (ACT) selon l'une des revendications précédentes et au moins une unité de commande (RCU) comprenant :
- une première borne destinée à être reliée au premier conducteur de phase (COND1) de l'actionneur (ACT),
- une deuxième borne destinée à être reliée au deuxième conducteur de phase (COND2) de l'actionneur (ACT),
- une troisième borne destinée à être reliée à la phase d'une tension alternative d'alimentation,
- deux interrupteurs (rI11, rI12) disposés respectivement sur un conducteur reliant la première borne à la troisième borne et sur un conducteur reliant la deuxième borne à la troisième borne, et
- un moyen (CTL) de détection de l'existence d'un contact direct entre la première borne et la deuxième borne.

9. Installation selon la revendication 8, **caractérisé en ce que** l'au moins une unité de commande (RCU) :
- permet d'appliquer la tension électrique alternative entre le conducteur de neutre (AC-N) et le premier conducteur de phase (COND1) ou entre le conducteur de neutre (AC-N) et le deuxième conducteur de phase (COND2),
- scrute la survenance de séquences d'au moins une commutation établissant ou supprimant un contact direct entre le premier (COND1) et le deuxième (COND2) conducteur de phase, et
- met en oeuvre une procédure spécifique à la séquence de commutation détectée.

10. Installation selon la revendication précédente, **caractérisé en ce que** la procédure spécifique comprend au moins l'une des actions suivantes :
- signalisation,
- coupure de l'alimentation sur le conducteur alimenté,
- temporisation,
- réduction de la tension issue du secteur.

## Claims

1. An actuator (ACT) supplied with an AC electric voltage, intended to drive a movable element (LD) equipping a building in a first direction when the AC electric voltage is applied between a neutral conductor (AC-N) and a first phase conductor (CONDL1) and in a second direction when the AC electric voltage is applied between the neutral conductor (AC-N) and a second phase conductor (COND2) and comprising a monophase induction motor (MOT) with permanent capacitor (CM), the capacitor being linked to each non-common end of two windings (W1, W2) of the motor (MOT), these windings moreover comprising a common end (P0), and at least one first (rI1) and one second (rI2) controlled switch, **characterized in that** it comprises a third (rI3) controlled switch of the inverter type and **in that** the first controlled switch (rI1) makes it possible to link the first phase conductor (COND1) to the common end (P0) of the windings (W1, W2) and wherein the second controlled switch (rI2) makes it possible to link the second phase conductor (COND2) to the common end (P0) of the windings (W1, W2) and wherein the third (rI3) controlled switch allows a connection of an internal wire (N1) either to the non-common end (P1) of the first winding, or to the non-common end (P2) of the second winding, the internal wire (N1) being linked to the neutral terminal (N0), via a fourth controlled switch (TRC) or via a direct link.

2. The actuator (ACT) as claimed in claim 1, wherein an item of information detected at the level of the actuator causes a sequence of at least one switching making or breaking a direct contact between the first (COND1) and the second (COND2) phase conductor.

3. The actuator (ACT) as claimed in claim 2, wherein the item of information relates to the occurrence of at least one of the following events:
- entry of the actuator (ACT) into a programming mode,
- reaching of a particular position by the movable element,
- detection of an overload,
- reaching of a critical temperature by one of the components of the actuator (ACT),
- start of execution of a command,
- end of execution of a command.

4. The actuator (ACT) as claimed in one of the preceding claims, which comprises a device (TCU) for detecting overload of forces measuring at least the voltage across the terminals of the permanent capacitor (CM) .

5. The actuator (ACT) as claimed in one of the preceding claims, which comprises means (CPU) making it possible to close the first controlled switch (rI1) and the second controlled switch (rI2) simultaneously.

6. The actuator (ACT) as claimed in one of the preceding claims, which comprises means (RP1, RP2, CPU) for detecting the appearance of one and the same potential on the first phase conductor (COND1) and the second phase conductor (COND2), while one of the first or second controlled switches (rI1, rI2) is open although the other is closed and for causing the opening of the closed controlled switch.

7. The actuator (ACT) as claimed in claim 1, which comprises means (CPU, RVU) for causing the opening of the fourth controlled switch (TRC) upon the appearance of one and the same potential on the first phase conductor (COND1) and the second phase conductor (COND2), while one of the first and second controlled switches (rI1, rI2) is open although the other is closed.

8. An installation (INS) comprising at least an actuator (ACT) as claimed in one of the preceding claims and at least a control unit (RCU) comprising:
- a first terminal intended to be linked to the first phase conductor (COND1) of the actuator (ACT),
- a second terminal intended to be linked to the second phase conductor (COND2) of the actuator (ACT),
- a third terminal intended to be linked to the phase of an AC supply voltage,
- two switches (rI11, rI12) disposed respectively on a conductor linking the first terminal to the third terminal and on a conductor linking the second terminal to the third terminal, and
- a means (CTL) of detecting the existence of a direct contact between the first terminal and the second terminal.

9. The installation (INS) as claimed in claim 8, wherein the at least one control unit (RCU):
- allows to apply the AC electric voltage between the neutral conductor (AC-N) and the first phase conductor (COND1) or between the neutral conductor (AC-N) and the second phase conductor (COND2);
- investigates the occurrence of a sequence of at least one switching making or breaking a direct contact between the first (COND1) and the second (COND2) phase conductor;
- implements a procedure specific to the switching sequence detected.

10. The installation (INS) as claimed in the preceding claim wherein the specific procedure comprises at least one of the following actions:
- signaling,
- cutting off of the supply on the supplied conductor,
- timeout,
- reduction of the voltage from the mains.

## Patentansprüche

1. Stellglied (ACT), das mit einer elektrischen Wechselspannung versorgt wird und dazu gedacht ist, ein bewegliches Element (LD), das ein Gebäude ausstattet, in einer ersten Richtung anzutreiben, wenn die elektrische Wechselspannung zwischen einem Nullleiter (AC-N) und einem ersten Phasenleiter (COND1) angelegt ist, und es in einer zweiten Richtung anzutreiben, wenn die elektrische Wechselspannung zwischen dem Nullleiter (AC-N) und einem zweiten Phasenleiter (COND2) angelegt ist, und umfassend einen Einphasen-Induktionsmotor (MOT) mit Betriebskondensator (CM), wobei der Kondensator mit jedem nicht gemeinsamen Ende von zwei Wicklungen (W1, W2) des Motors (MOT) verbunden ist, wobei diese Wicklungen im Übrigen ein gemeinsames Ende (P0) umfassen, und mindestens einen ersten (rI1) und einen zweiten (rI2) gesteuerten Schalter,
**dadurch gekennzeichnet, dass** es einen dritten gesteuerten Schalter (rI3) umschaltender Art umfasst, und dass es der erste gesteuerte Schalter (rI1) ermöglicht, den ersten Phasenleiter (COND1) mit dem gemeinsamen Ende (P0) der Wicklungen (W1, W2) zu verbinden, dass es der zweite gesteuerte Schalter (rI2) ermöglicht, den zweiten Phasenleiter (COND2) mit dem gemeinsamen Ende (P0) der Wicklungen (W1, W2) zu verbinden, und dass der dritte gesteuerte Schalter (rI3) eine Verbindung eines inneren Drahts (N1) entweder mit dem nicht gemeinsamen Ende (P1) der ersten Wicklung oder mit dem nicht gemeinsamen Ende (P2) der zweiten Wicklung ermöglicht, wobei der innere Draht (N1) über einen vierten gesteuerten Schalter (TRC) oder über eine direkte Verbindung mit einer Sternpunktklemme (N0) verbunden ist.

2. Stellglied nach Anspruch 1, **dadurch gekennzeichnet, dass** eine am Stellglied (ACT) erkannte Information eine Sequenz mindestens einer Umschaltung hervorruft, die einen direkten Kontakt zwischen dem ersten (COND1) und dem zweiten (COND2) Phasenleiter herstellt oder aufhebt.

3. Stellglied nach Anspruch 2, **dadurch gekennzeichnet, dass** die Information das Auftreten mindestens eines der folgenden Ereignisse betrifft:
- Eintreten des Stellglieds (ACT) in einen Programmiermodus,
- Erreichen einer bestimmten Position durch das mobile Element,
- Erkennen einer Überlast,
- Erreichen einer kritischen Temperatur durch eines der Bauteile des Stellglieds (ACT),
- Beginn der Ausführung eines Befehls,
- Ende der Ausführung eines Befehls.

4. Stellglied (ACT) nach einem der vorhergehenden Ansprüche, **dadurch gekennzeichnet, dass** es eine Vorrichtung (TCU) zum Erkennen einer Kraftüberlast umfasst, die mindestens die Spannung an den Klemmen des Betriebskondensators (CM) misst.

5. Stellglied (ACT) nach einem der vorhergehenden Ansprüche, **dadurch gekennzeichnet, dass** es Mittel (CPU) umfasst, die es ermöglichen, den ersten gesteuerten Schalter (rI1) und den zweiten gesteuerten Schalter (rI2) gleichzeitig zu schließen.

6. Stellglied (ACT) nach einem der vorhergehenden Ansprüche, **dadurch gekennzeichnet, dass** es Mittel (RP1, RP2, CPU) umfasst, um das Auftreten eines gleichen Potenzials an dem ersten Phasenleiter (COND1) und dem zweiten Phasenleiter (COND2) zu erkennen, während einer von dem ersten oder zweiten gesteuerten Schalter (rI1, rI2) geöffnet ist, während der andere geschlossen ist, und um die Öffnung des geschlossenen gesteuerten Schalters zu veranlassen.

7. Stellglied (ACT) nach Anspruch 1, **dadurch gekennzeichnet, dass** es Mittel (CPU, RVU) umfasst, um die Öffnung des vierten gesteuerten Schalters (TRC) bei dem Auftreten desselben Potenzials an dem ersten Phasenleiter (COND1) und dem zweiten Phasenleiter (COND2) zu veranlassen, während einer von dem ersten oder zweiten gesteuerten Schalter (rI1, rI2) geöffnet ist, während der andere geschlossen ist.

8. Anlage (INS), umfassend mindestens ein Stellglied (ACT) nach einem der vorhergehenden Ansprüche und mindestens eine Steuereinheit (RCU), umfassend:
- eine erste Klemme, die dazu gedacht ist, mit dem ersten Phasenleiter (COND1) des Stellglieds (ACT) verbunden zu sein,
- eine zweite Klemme, die dazu gedacht ist, mit dem zweiten Phasenleiter (COND2) des Stellglieds (ACT) verbunden zu sein,
- eine dritte Klemme, die dazu gedacht ist, mit der Phase einer Versorgungswechselspannung verbunden zu sein,
- zwei Schalter (rI11, rI12), die jeweils an einem Leiter, der die erste Klemme mit der dritten Klemme verbindet, und an einem Leiter, der die zweite Klemme mit der dritten Klemme verbindet, angeordnet sind, und
- ein Mittel (CTL) zum Erkennen des Vorliegens eines direkten Kontakts zwischen der ersten Klemme und der zweiten Klemme.

9. Anlage nach Anspruch 8, **dadurch gekennzeichnet, dass** die mindestens eine Steuereinheit (RCU):
- es ermöglicht, die elektrische Wechselspannung zwischen dem Nullleiter (AC-N) und dem ersten Phasenleiter (COND1) oder zwischen dem Nullleiter (AC-N) und dem zweiten Phasenleiter (COND2) anzulegen,
- das Auftreten von Sequenzen mindestens einer Umschaltung überwacht, die einen direkten Kontakt zwischen dem ersten (COND1) und dem zweiten (COND2) Phasenleiter herstellen oder aufheben, und
- einen Verfahrensablauf umsetzt, der für die erkannte Schaltsequenz spezifisch ist.

10. Anlage nach dem vorhergehenden Anspruch, **dadurch gekennzeichnet, dass** der spezifische Verfahrensablauf mindestens eine der folgenden Aktionen umfasst:
- Signalisierung,
- Abschalten der Versorgung an dem versorgten Leiter,
- Verzögerung,
- Reduzierung der Spannung aus dem Netz.
